Europäisches Patentamt

European Patent Office

Office européen des brevets

(19)

(11) Veröffentlichungsnummer: **0 035 606
B1**

(12)

# EUROPÄISCHE PATENTSCHRIFT

(45) Veröffentlichungstag der Patentschrift:
18.07.84

(51) Int. Cl.³: **H 02 K  3/22,** F 16 L  41/02,
**H 02 K  9/00**

(21) Anmeldenummer: 80200226.1

(22) Anmeldetag: 10.03.80

(54) **Wasserverteilstück und Verfahren zu dessen Herstellung.**

(43) Veröffentlichungstag der Anmeldung:
16.09.81 Patentblatt 81/37

(45) Bekanntmachung des Hinweises auf die Patenterteilung:
18.07.84 Patentblatt 84/29

(84) Benannte Vertragsstaaten:
**CH DE FR GB IT SE**

(56) Entgegenhaltungen:
**FR - A - 1 098 594
FR - A - 1 429 184
FR - A - 1 525 426
FR - A - 2 409 631
US - A - 3 693 036**

(73) Patentinhaber: **BBC Aktiengesellschaft Brown, Boveri &
Cie., Haselstrasse, CH-5401 Baden (CH)**

(72) Erfinder: **Zerlik, Willibald, Weihermattstrasse 389,
CH-5242 Birr (CH)**

## Beschreibung

Die Erfindung bezieht sich auf ein Verteilerstück für die elektrische und hydraulische Verbindung zwischen den einzelnen aus unterschiedlichen Nuten austretenden und auf unterschiedlichen Zylinderflächen liegenden Leiterenden im Wickelkopf des Rotors einer elektrischen Maschine und den Rohrleitungen, welche für den Zu- bzw. Abfluß des Kühlmittels dienen, sowie auf ein Verfahren zur Herstellung eines derartigen Verteilerstückes.

Bei elektrischen Maschinen mit flüssigkeitsgekühlten Rotorwicklungen wird die Kühlflüssigkeit zu den Leitern über flexible elektrisch isolierte Rohrleitungen zu- bzw. abgeführt. Die Verbindung der Rohrleitungen mit der Wicklung erfolgt im Wickelkopf des Rotors über Wasserverteilerstücke. Diese stellen gleichzeitig die elektrische Verbindung der Leiterenden untereinander her. Die Wasserverteilerstücke sind im allgemeinen in der axial äußersten gut zugänglichen Radialebene des Wickelkopfes angeordnet, um die Wasseranschlüsse leicht anbringen zu können, und bilden einen Bestandteil der Wicklung (H. Sequenz; Herstellung der Wicklungen elektrischer Maschinen, Springer-Verlag 1973, S. 171). Aus der FR-A-1 525 426 ist es bekannt, in dem Verteilerstück zwei in radial unterschiedlichem Abstand von der Rotorachse übereinander liegende Anschlußöffnungen über gerade Bohrungen, die einen spitzen Winkel miteinander einschließen, mit einer gemeinsamen Bohrung für den Kühlmittelanschluß zu verbinden.

Es ist Aufgabe der Erfindung, ein Verteilerstück zu schaffen, daß die elektrische und hydraulische Verbindung der auf verschiedenen Zylinderflächen liegenden Leiterenden weiter verbessert und sich durch einfachen Aufbau und gute Strömungsverhältnisse auszeichnet, sowie ein wirtschaftliches Verfahren zur Herstellung eines Wasserverteilerstückes anzugeben.

Die Lösung des ersten Teils dieser Aufgabe ist erfindungsgemäß dadurch gekennzeichnet, daß das Verteilerstück zwei von einem Anschlußstutzen ausgehende Schenkel aufweist, deren freie Enden in die unterschiedlichen Richtungen der anzuschließenden Leiterenden weisen und auf radial unterschiedlich liegenden Zylinderflächen mit den Leiterenden verbindbar sind und die an dem stutzenseitigen Ende in der Weise einen spitzen Winkel einschließen, daß deren Bohrungen unmittelbar in die Bohrungen des Anschlußstutzens münden, wobei die Bohrung im Anschlußstutzen im wesentlichen mit einem stutzenseitigen Bohrungsabschnitt in einem der beiden Schenkel fluchtet.

Dadurch, daß die hydraulische Verbindung auf der kleineren, der Welle benachbarten Zylinderfläche liegt, werden die Rohrzuleitungen zwischen Wasserverteilerstück und Wasserkammer geringeren Fliehkräften ausgesetzt.

Die durch die Erfindung erreichten Vorteile sind im wesentlichen die folgenden:

— Die Ausbildung und Lage der Bohrungen, insbesondere nach Anspruch 2, ergeben einen geringen Strömungswiderstand für die Kühlflüssigkeit, da abrupte Richtungsänderungen vermieden sind;

— die einstückige Ausbildung macht eine geringstmögliche Anzahl von Schweiß- und/ oder Lötstellen notwendig;

— Hilfsbohrungen, die nachträglich mittels eines aufwendigen Verfahrens wieder verschlossen werden müssen, sind nicht erforderlich;

— die Freiheit in der Wahl der Schenkellängen und deren Abstand voneinander — vorzugsweise wenn der Abstand der freien Enden zueinander annähernd der Länge eines Schenkels und diese ungefähr der vierfachen Länge des Anschlußstutzens entspricht — ermöglicht es, die notwendigen Verbindungsstellen unabhängig voneinander — also auch jede für sich — herzustellen; die Schenkellängen können so bemessen werden, daß beim Erwärmen der einen Verbindungsstelle die andere (bereits fertige) nicht nachteilig beeinflußt wird;

— es ist möglich, ein Leiterende bereits außerhalb des Rotors mit einem Wasserverteilerstück zu versehen;

— bei der Herstellung der Verbindungen mit der Wicklung bleibt die Temperatur im (in der Regel mit einem Innengewinde versehenen) Anschlußstutzen derart niedrig, daß das Material keine nachteiligen Veränderungen erfährt, was insbesondere dann von Bedeutung ist, wenn das Wasserverteilerstück aus Kupfer besteht;

— aufwendige Kühlvorrichtungen zum Schutz der Gewindepartie des Anschlußstutzens sind entbehrlich;

— Dichtigkeits- und Durchstrahlungsprüfungen zur Beurteilung der Güte der Verbindungsstellen von Wasserverteilerstück und Leiterenden (Schweiß- oder Lötstellen) werden erleichtert.

Das erfindungsgemäße Verfahren zur Herstellung eines Wasserverteilerstückes ist gekennzeichnet durch folgende Fertigungsschritte:

a) ausgehend von einem einstückigen Werkstückrohling von im wesentlichen Quaderform werden in Werkstücklängsrichtung ein Schlitz entsprechend der gewünschten Schenkellänge hergestellt,

b) ein Schenkel des Werkstückes wird vom anderen Schenkel weggebogen,

c) im Anschlußstutzen wird eine Sacklochbohrung in Richtung des ungebogenen Schenkels hergestellt,

d) in die Schenkel werden zwei geradlinige Bohrungen in Schenkellängsrichtung hergestellt, wobei beide Bohrungen in die Sacklochbohrung einmünden,

e) der ursprünglich abgebogene Schenkel wird in die Ausgangslage wieder zurückgebogen,

f) beide Schenkel werden gegenseitig aus ihrer ursprünglichen Ebene und orthogonal zu dieser abgebogen,

g) abschließend werden die Schenkel den unterschiedlichen Krümmungsradien der Zylinderflächen angepaßt.

Die Erfindung wird nachstehend anhand eines in der Zeichnung dargestellten Ausführungsbeispieles näher erläutert. In der Zeichnung zeigt

Fig. 1 eine schematische Draufsicht auf das Rotorende einer elektrischen Maschine mit wassergekühlter Wicklung, teilweise in Schnittdarstellung,

Fig. 2 eine perspektivische Darstellung des Verteilerstückes,

Fig. 3 eine Seitenansicht auf einen teilweise bearbeiteten Werkstückrohling, teilweise in Schnittdarstellung,

Fig. 4 eine Draufsicht auf das Verteilerstück und

Fig. 5 eine Vorderansicht des Verteilerstückes.

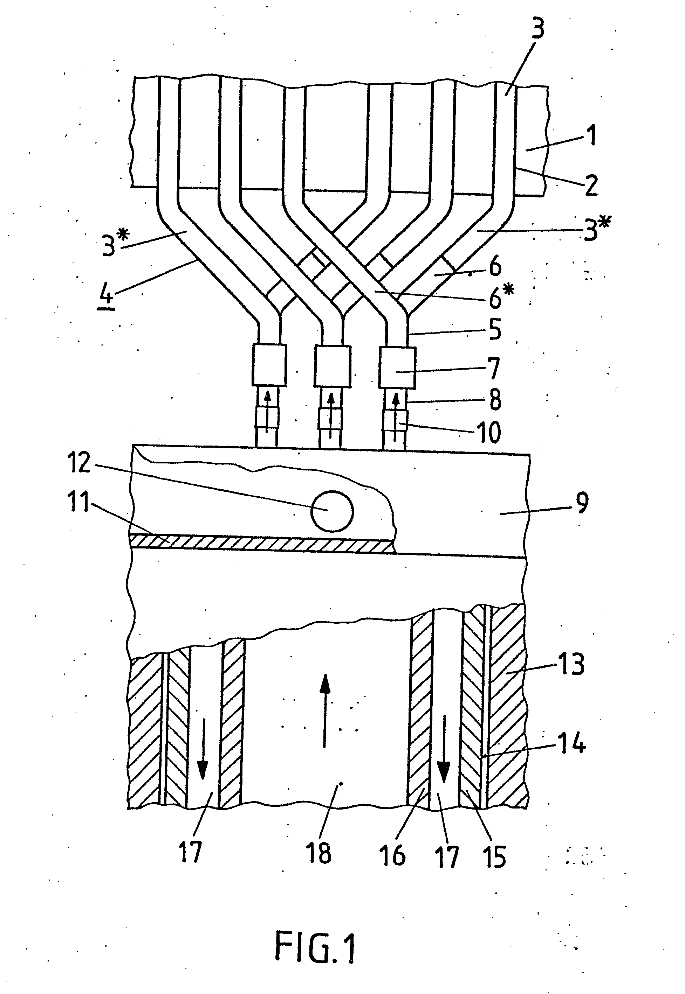

Aus Fig. 1 ist ersichtlich, daß im Rotorkörper 1 einer elektrischen Maschine die aus unterschiedlichen Nuten 2 austretenden und auf radial unterschiedlichen Zylinderflächen liegenden Leiterenden 3* im Wickelkopf 4 der Rotorwicklung 3 durch Verteilerstücke 5 untereinander verbunden sind. Die Verteilerstücke 5 weisen zwei auf radial unterschiedlichen Zylinderflächen liegende Schenkel 6, 6* auf, die in einen Anschlußstutzen 7 einmünden. Diese Anschlußstutzen 7 sind an Rohrleitungen 8 angeschlossen, die die Verbindung zu einer Wasserkammer 9 herstellen. Im Zuge der Rohrleitungen 8 sind Isolierstrecken 10 (in Fig. 1 schematisch angedeutet) zur Potentialtrennung angeordnet.

Von der Wasserkammer 9 ist im Teilschnitt der Fig. 1 ein Teil einer Wand 11 und einer Eintrittsbohrung 12 dargestellt.

In der Rotorwelle 13 ist in einer Bohrung 14 ein äußeres Rohr 15 und ein inneres Rohr 16 angeordnet, wodurch ein äußerer Kanal 17 für die Ableitung des Kühlwassers und ein innerer Kanal 18 für die Zuführung des Kühlwassers gebildet werden.

In dem dargestellten Beispiel ist eine Kaltwasserkammer veranschaulicht. Das Kühlwasser fließt aus dem inneren Kanal 18 durch eine (nicht dargestellte) radial verlaufende Rohrleitung und durch die Eintrittsbohrung 12 in die Kaltwasserkammer 9 und gelangt über Rohrleitungen 8 und Verteilerstücke 5 in die Wicklungen 3. Das erwärmte Kühlwasser wird über in Umfangsrichtung versetzte Verteilerstücke und Rohrleitungen in (nicht dargestellte) Warmwasserkammern geleitet und im äußeren Kanal 17 abgeführt.

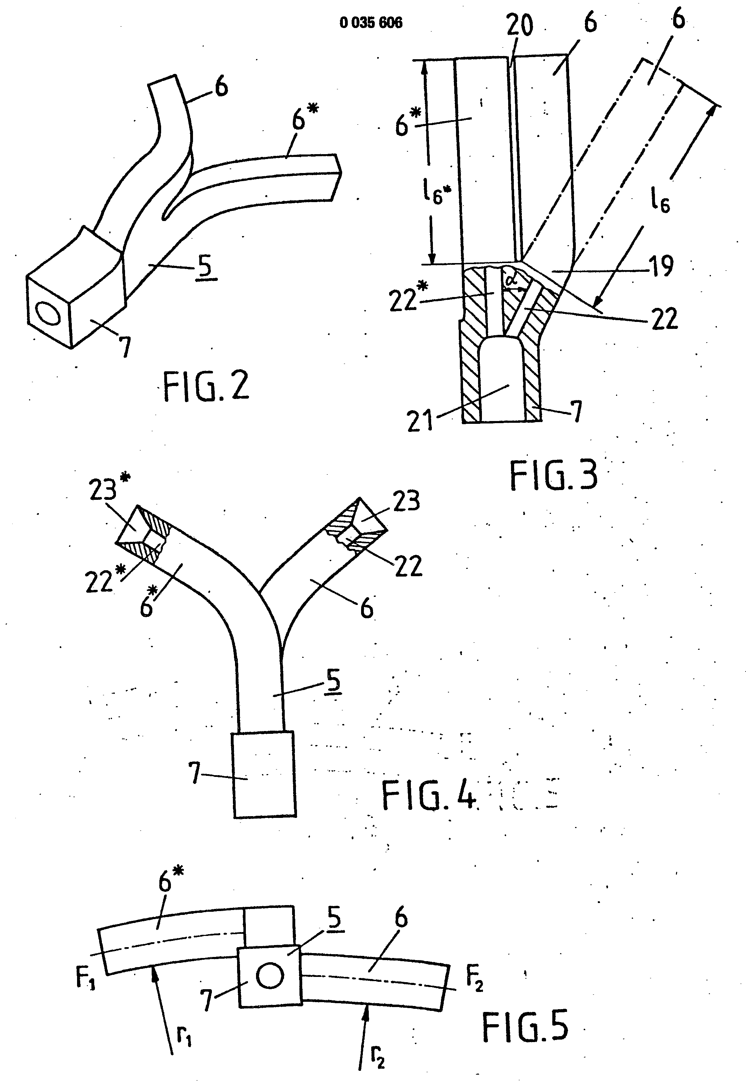

Die Fig. 2, 4 und 5 zeigen verschiedene Ansichten des Verteilerstückes 5. Die zwei vom Anschlußstutzen 7 ausgehenden Schenkel 6, 6*, deren freie Enden in entgegengesetzte Richtungen abgebogen sind, liegen, wie aus Fig. 5 hervorgeht, auf unterschiedlichen Zylinderflächen $F_1$, $F_2$ mit den Radien $r_1$ und $r_2$.

Das Verfahren zur Herstellung eines Verteilerstückes 5 wird nachfolgend näher erläutert:

Wie aus Fig. 3 hervorgeht, wird im ursprünglich einstückigen Werkstückrohling 19 in Längsrichtung ein Schlitz 20 entsprechend der gewünschten Schenkellänge $l_6$ bzw. $l_{6^*}$ hergestellt. Der eine Schenkel 6 des Werkstückes wird vom anderen Schenkel 6* in der Zeichenebene weggebogen. Im Anschlußstutzen 7 wird eine Sacklochbohrung 21 in Richtung des ungebogenen Schenkels 6* eingebracht und zwei geradlinige Bohrungen 22, 22* in Schenkellängsrichtung hergestellt, wobei beide Bohrungen 22, 22* in die Sacklochbohrung 21 einmünden. Der abgebogene Schenkel 6 wird wieder in die Ausgangslage zurückgebogen und, wie aus Fig. 4 ersichtlich, werden beide Schenkel 6, 6* gegenseitig aus ihrer ursprünglichen Ebene (wie in Fig. 3 dargestellt) orthogonal zu dieser abgebogen. Aus dem Teilschnitt von Fig. 3 ist ersichtlich, daß die Bohrungen 22, 22* der beiden Schenkel 6, 6* in einem spitzen Winkel $\alpha$ in den Anschlußstutzen 7 einmünden. Wie aus Fig. 3 ferner hervorgeht, fluchtet die Bohrung 21 im Anschlußstutzen 7 mit der Bohrung 22* im Schenkel 6* im stutzenseitigen Schenkelabschnitt.

Die Durchgangsbohrungen 22, 22* sind an den freien Schenkelenden erweitert. In diese Erweiterungen 23, 23* werden die komplementär ausgebildeten Leiterenden 3* der Wicklung 3 eingelötet.

Bezeichnungsliste

| | | |
|---|---|---|
| 1 | = | Rotorkörper |
| 2 | = | Nuten |
| 3 | = | Rotorwicklung |
| 3* | = | Leiterenden der Rotorwicklung |
| 4 | = | Wickelkopf des Rotors |
| 5 | = | Verteilerstücke |
| 6, 6* | = | Schenkel |
| 7 | = | Anschlußstutzen |
| 8 | = | Rohrleitungen |
| 9 | = | Wasserkammer |
| 10 | = | Isolierstrecke |
| 11 | = | Wand der Wasserkammer |
| 12 | = | Eintrittsbohrung |
| 13 | = | Rotorwelle |
| 14 | = | Bohrung in der Welle |
| 15 | = | Äußeres Rohr |
| 16 | = | Inneres Rohr |
| 17 | = | Äußerer Kanal |
| 18 | = | Innerer Kanal |
| 19 | = | Werkstückrohling |
| 20 | = | Schlitz |
| 21 | = | Sacklochbohrung |
| 22, 22* | = | Bohrungen in den Schenkeln |
| 23, 23* | = | Erweiterungen der Bohrungen 22, 22* |
| $F_1$, $F_2$ | = | Zylinderflächen |
| $l_6$, $l_{6^*}$ | = | Länge des Schenkels 6 bzw. 6* |

## Patentansprüche

1. Verteilerstück für die elektrische und hydraulische Verbindung zwischen den einzelnen aus unterschiedlichen Nuten (2) austretenden und auf unterschiedlichen Zylinderflächen (F₁, F₂) liegenden Leiterenden (3*) im Wickelkopf (4) des Rotors einer elektrischen Maschine und den Rohrleitungen (8), welche für den Zu- bzw. Abfluß dienen, dadurch gekennzeichnet, daß das Verteilerstück (5) zwei von einem Anschlußstutzen (7) ausgehende Schenkel (6, 6*) aufweist, deren freie Enden in die unterschiedlichen Richtungen der anzuschließenden Leiterenden (3*) weisen und auf radial unterschiedlich liegenden Zylinderflächen mit den Leiterenden (3*) verbindbar sind, und die an dem stutzenseitigen Ende in der Weise einen spitzen Winkel (α) einschließen, daß deren Bohrungen (22, 22*) unmittelbar in die Bohrung des Anschlußstutzens (21) münden, wobei die Bohrung im Anschlußstutzen (7) im wesentlichen mit einem stutzenseitigen Bohrungsabschnitt in einem der beiden Schenkel (6, 6*) fluchtet.

2. Verteilerstück nach Anspruch 1, dadurch gekennzeichnet, daß die Bohrung (22) des einen Schenkels (6) und diejenige des Anschlußstutzens (7) auf ein und derselben Zylinderfläche (F₂), und zwar vorzugsweise auf der der Welle (13) benachbarten Zylinderfläche liegt, während die Bohrung (22*) des anderen Schenkels (6*) nur mit einem dem Schenkelende zugeordneten Abschnitt auf einer anderen Zylinderfläche (F₁) gelegen ist.

3. Verteilerstück nach Anspruch 1, dadurch gekennzeichnet, daß der Abstand der freien Enden zueinander annähernd der Länge eines Schenkels (I₆ bzw. I₈*) entspricht und daß diese ungefähr der vierfachen axialen Länge des Anschlußstutzens (7) entspricht.

4. Verfahren zur Herstellung eines Verteilerstückes gemäß Anspruch 1, gekennzeichnet durch folgende Fertigungsschritte:

a) ausgehend von einem einstückigen Werkstückrohling (19) von im wesentlichen Quaderform werden in Werkstücklängsrichtung ein Schlitz (20) entsprechend der gewünschten Schenkellänge (I₆, I₈*) hergestellt,

b) ein Schenkel (6) des Werkstückes (19) wird vom anderen Schenkel weggebogen,

c) im Anschlußstutzen (7) wird eine Sacklochbohrung (21) in Richtung des ungebogenen Schenkels hergestellt,

d) in die Schenkel (6, 6*) werden zwei geradlinige Bohrungen (22, 22*) in Schenkellängsrichtung hergestellt, wobei beide Bohrungen in die Sacklochbohrung (21) einmünden,

e) der ursprünglich abgebogene Schenkel (6) wird in die Ausgangslage wieder zurückgebogen,

f) beide Schenkel (6, 6*) werden gegenseitig aus ihrer ursprünglichen Ebene und orthogonal zu dieser abgebogen,

g) abschließend werden die Schenkel (6, 6*) den unterschiedlichen Krümmungsradien (r₁, r₂) der Zylinderflächen angepaßt.

## Claims

1. Distributor for the electrical and hydraulical connection between the individual conductor ends (3*), emerging from different grooves (2) and located on different cylinder surfaces (F₁, F₂), in the end winding (4) of the rotor an electrical machine and the pipes (8) serving for inflow and outflow, characterized in that the distributor (5) has two arms (6, 6*) which start from a connection branch (7) and the free ends of which point in the different directions of the conductor ends (3*) to be connected and can be connected to the conductor ends (3*) at cylinder surfaces in radially different positions and which, at the end on the branch side, enclose an acute angle (α) in such a way that their bores (22, 22*) lead directly into the bore of the connection branch (21), the bore in the connection branch (7) being essentially in alignment with a bore section on the branch side in one of the two arms (6, 6*).

2. Distributor according to claim 1, characterized in that the bore (22) of one arm (6) and that of the connection branch (7) lie on one and the same cylinder surface (F₂), and preferably on the cylinder surface adjacent to the shaft (13), whilst only a section, associated with the end of the arm, of the bore (22*) of the other arm (6*) is located on another cylinder surface (F₁).

3. Distributor according to claim 1, characterized in that the mutual distance between the free ends corresponds approximately to the length of one arm (I₆ or I₆*) and that this distance corresponds approximately to four times the axial length of the connection branch (7).

4. Process for the manufacture of a distributor according to claim 1, characterized by the following production steps:

a) starting with a one-piece workpiece blank (19) of substantially cuboid form, a slit (20) corresponding to the desired arm length (I₆, I₆*) is made in the longitudinal direction of the workpiece,

b) one arm (6) of the workpiece (19) is bent away from the other arm,

c) a blind bore (21) is made in the connection branch (7) in the direction of the arm which has not been bent,

d) two straight bores (22, 22*) are made in the arms (6, 6*) in the longitudinal direction thereof, both bores leading into the blind bore (21),

e) the arm (6) which was initially bent away is bent back again into the starting position,

f) both arms (6, 6*) are mutually bent out of their original plane and at right angles thereto, and

g) finally, the arms (6, 6*) are adapted to the different radii of curvature (r₁, r₂) of the cylinder surfaces.

## Revendications

1. Pièce de distribution pour le raccordement électrique et hydraulique entre les extrémités individuelles de conducteurs (3*) sortant de diverses rainures (2) et se trouvant sur des surfaces cylindriques (F₁, F₂) différentes dans la tête de bobinage (4) du rotor d'une machine électrique et les tuyaux (8) qui servent à amener et à évacuer l'agent de refroidissement, caractérisée en ce que la pièce de distribution (5) présente deux branches (6, 6*) partant d'une tubulure de raccordement (7), dont les extrémités libres sont orientées dans les diverses directions des Extrémités de conducteurs (3*) à raccorder et peuvent être raccordées aux extrémités des conducteurs (3*) se trouvant sur des surfaces cylindriques situées à des niveaux différents dans le sens radial et qui, à l'extrémité située du côté de la tubulure, forment entre elles un angle inclus aigu (α), de telle manière que leurs lumières (22, 22*) s'ouvrent directement dans la lumière (21) de la tubulure de raccordement, la lumière de la tubulure de raccordement (7) se trouvant en fait, par une section située du côté de la tubulure, dans le prolongement de la lumière de l'une des deux branches (6, 6*).

2. Pièce de distribution suivant la revendication 1, caractérisée en ce que la lumière (22) de l'une des branches (6) et celle de la tubulure de raccordement (7) sont disposées sur une seule et même surface cylindrique (F₂) et de préférence sur la surface cylindrique voisine de l'arbre (13), tandis que la lumière (22*) de l'autre branche (6*) n'est disposée sur une autre surface cylindrique (F₁) que par une section adjointe à l'extrémité de la branche.

3. Pièce de distribution suivant la revendication 1, caractérisée en ce que l'écart des extrémités libres correspond à peu près à la longueur d'une branche (l₆, l₆*) et cette longueur correspond à peu près au quadruple de la longueur axiale de la tubulure de raccordement (7).

4. Procédé pour fabriquer une pièce de distribution suivant la revendication 1, caractérisé par les opérations de fabrication suivantes:

a) au départ d'une ébauche d'ouvrage d'une seule pièce (19) de forme essentiellement parallélépipédique, on ménage dans le sens de la longueur de l'ouvrage une fente (20) correspondant à la longueur souhaitée des branches (l₆, l₆*),

b) on écarte une branche (6) de l'ouvrage (19) de l'autre par pliage,

c) on ménage une lumière borgne (21) dans la tubulure de raccordement (7), dans la direction de la branche non pliée,

d) on ménage deux lumières rectilignes (22, 22*) dans les branches (6, 6*) dans le sens de leur longueur, ces deux lumières s'ouvrant dans la lumière borgne (21),

e) on ramène la branche initialement pliée (6) dans sa position de départ,

f) on plie les deux branches (6, 6*) en sens opposés à partir de leur plan initial et perpendiculairement à celui-ci,

g) on adapte ensuite les branches (6, 6*) aux rayons de courbure différents (r₁, r₂) des surfaces cylindriques.

FIG.1

0 035 606

FIG.2

FIG.3

FIG.4

FIG.5